# EUROPEAN PATENT SPECIFICATION

(11) **EP 2 639 873 B1**
(45) Date of publication and mention of the grant of the patent: **21.09.2016**
(21) Application number: 13158566.3
(22) Date of filing: 11.03.2013
(51) Int. Cl.: H01M 8/06, H01M 8/04

(54) **Fuel cell system**
Brennstoffzellensystem
Système de pile à combustible

(30) Priority: 12.03.2012 JP 2012054999
(43) Date of publication of application: 18.09.2013
(73) Proprietor: AISIN SEIKI KABUSHIKI KAISHA, Kariya-shi, Aichi 448-8650 (JP); KYOCERA CORPORATION, Kyoto-shi, Kyoto 612-8501 (JP)
(72) Inventor: Ando, Yasuaki, Kariya-shi, Aichi 448-8650 (JP); Toyonaga, Norihiko, Kariya-shi, Aichi 448-0027 (JP); Takada, Kazumasa, Kariya-shi, Aichi 448-8650 (JP); Taniguchi, Eiji, Kyoto 612-8501 (JP)
(74) Representative: TBK

(56) References cited:
- EP-A1- 2 416 421
- JP-A- 2009 277 525
- JP-B2- 3 284 820

## Description

### TECHNICAL FIELD

This disclosure generally relates to a fuel cell system.

### BACKGROUND DISCUSSION

A known fuel cell system is disclosed in JP2009-277525A (which will be hereinafter referred to as Reference 1). The fuel cell system disclosed in Reference 1 includes a control device, a cell temperature control means, a heat-to-power ratio follow-up control means, and a temperature adjustment means for heat-to-power ratio control. The control device controls flow rates of fuel and air which correspond to an operation amount of the fuel cell system (the flow rates of fuel and air will be hereinafter referred to as a fuel flow rate and an air flow rate, respectively). The cell temperature control means functions to adjust the fuel flow rate or the air flow rate in accordance with a cell temperature and a combustion-chamber temperature to thereby maintain a cell or a combustion chamber in a stable temperature condition. The heat-to-power ratio follow-up control means adjusts the fuel flow rate in order to change a heat-to-power ratio. The temperature adjustment means for heat-to-power ratio control provides a cell temperature adjustment value or a combustion-chamber temperature adjustment value to the cell temperature control means. According to Reference 1, in a case where the heat-to-power ratio is changed, a temperature condition, for example, a cell temperature or an anode-off gas temperature, of the fuel cell system including the aforementioned configuration may be maintained stable without additional complex configuration. In addition, heat-to-power ratio following capability and durability of the fuel cell system may be improved.

According to the fuel cell system disclosed in Reference 1, the fuel flow rate is adjusted in accordance with the combustion-chamber temperature to thereby maintain the combustion chamber in the stable temperature condition. In addition, according to the fuel cell system disclosed in Reference 1, the fuel flow rate is adjusted in order to change the heat-to-power ratio. Such adjustments of the fuel flow rate are different from a calibration of a flow sensor, for example, provided at a fuel cell system in order to detect a fuel flow rate. For example, the flow sensor for detecting the fuel flow rate is provided at the fuel cell system of Reference 1 and is not calibrated accurately. In such case, even when the fuel flow rate is adjusted in accordance with the combustion-chamber temperature and is adjusted in order to change the heat-to-power ratio, the fuel may not supplied to the cell at a desired flow rate.

A need thus exists for a fuel cell system which may accurately calibrate a flow sensor for detecting a flow rate of fuel.

### SUMMARY

According to an aspect of this disclosure, a fuel cell system includes a fuel cell including an anode and a cathode and generating electricity by a fuel and an oxidant gas respectively supplied to the anode and the cathode, a reforming portion generating the fuel by a source material and water to supply the fuel to the fuel cell, a combustion portion burning an anode-off gas from the fuel cell and a cathode-off gas from the fuel cell to heat the reforming portion, a casing formed by an insulating material and accommodating therewithin the fuel cell, the reforming portion, and the combustion portion, a supply device supplying the source material, a flow sensor detecting a supply flow rate of the source material, a temperature sensor detecting a temperature of the combustion portion, and a control device controlling the supply device, the control device including a temperature obtaining means for obtaining the temperature of the combustion portion by controlling the supply device to supply the source material at a constant supply flow rate, the temperature being detected by the temperature sensor during a period in which the temperature is stable, a temperature deviation obtaining means for obtaining a temperature deviation of the combustion portion, the temperature deviation being a difference between a reference temperature of the combustion portion and the temperature of the combustion portion obtained by the temperature obtaining means, a supply flow rate deviation obtaining means for obtaining a deviation of the supply flow rate of the source material from the temperature deviation of the combustion portion obtained by the temperature deviation obtaining means, and an adjustment means for adjusting the supply flow rate of the source material obtained by the flow sensor, on the basis of the deviation of the supply flow rate obtained by the supply flow rate deviation obtaining means.

As described above, the fuel cell system of the disclosure includes the fuel cell generating electricity by the source material and the oxidant gas respectively supplied to the anode and the cathode, the reforming portion generating the fuel by the source material and the water to supply the fuel to the fuel cell, the combustion portion burning the anode-off gas from the fuel cell and the cathode-off gas from the fuel cell to heat the reforming portion, and the casing formed by the insulating material and accommodating therewithin the fuel cell, the reforming portion, and the combustion portion. In the fuel cell system Including such configuration, it is found that a temperature of the combustion portion is sensitive to a supply flow rate of the source material.

According to a result of a specific experiment in which an actual equipment is used, the sensitivity of the temperature of the combustion portion is ± 150 degrees C in a case where the supply flow rate of the source material is varied in a range of use thereof from 1.0 to 2.5 NL/min. Further, according to the result of the specific experiment, the sensitivity of the temperature of the combustion portion is ± 3.9 degrees C in a case where a supply flow rate of cathode air (the oxidant gas) is varied in a range of use thereof from 20 to 50 NL/min. Furthermore, according to the result of the specific experiment, the sensitivity of the temperature of the combustion portion is ± 3 degrees C in a case where the supply flow rate of the water is varied in a range of use thereof from 2 to 6 ml/min. Moreover, according to the result of the specific experiment, the sensitivity of the temperature of the combustion portion is ± 11 degrees C in a case where outside air temperature of the fuel cell system is varied in a range of use thereof from -10 degrees C to 43 degrees C.

As clearly understood from the result, the temperature of the combustion portion is sensitive to the supply flow rate of the source material. In the fuel cell system of the disclosure, such feature of the temperature of the combustion portion is utilized to correct a detection error of the flow sensor for detecting a supply flow rate of the source material, on the basis of a thermal deviation of the combustion portion.

According to the fuel cell system of the disclosure, the temperature obtaining means controls the supply device to supply the source material at the constant supply flow rate, thereby obtaining a temperature of the combustion portion, which is detected by the temperature sensor during the period in which the temperature of the combustion portion is stable. Further, the temperature deviation obtaining means obtains a temperature deviation of the combustion portion, which is a difference between the reference temperature of the combustion portion and the temperature of the combustion portion, which is obtained by the temperature obtaining means. Furthermore, the supply flow rate deviation obtaining means obtains a supply flow rate deviation of the source material from the temperature deviation obtained by the temperature deviation obtaining means. In addition, the adjustment means adjusts a supply flow rate of the source material, which is detected by the flow sensor, on the basis of the supply flow rate deviation obtained by the supply flow rate deviation obtaining means.

As described above, the source material is supplied at the constant supply flow rate, thereby obtaining the supply flow rate deviation from the temperature deviation that is the difference between the reference temperature of the combustion portion and the temperature of the combustion portion, which is obtained during the period in which the temperature is stable. Thereafter, the supply flow rate of the source material, which is detected by the flow sensor is adjusted on the basis of the supply flow rate deviation obtained from the temperature deviation. Thus, the temperature of the combustion portion, which is sensitive to the supply flow rate of the source material, is utilized; thereby, the flow sensor for detecting a flow rate of the source material (fuel) may be accurately calibrated.

According to another aspect of the disclosure, in a case where the temperature obtaining means is unable to obtain the temperature of the combustion portion detected by the temperature sensor during the period in which the temperature is stable, each processing of the temperature deviation obtaining means, the supply flow rate deviation obtaining means, and the adjustment means is stopped, and each processing of the temperature obtaining means, the temperature deviation obtaining means, the supply flow rate deviation obtaining means, and the adjustment means is retried at a time when a predetermined time has elapsed after each processing of the temperature deviation obtaining means, the supply flow rate deviation obtaining means, and the adjustment means is stopped .

Therefore, even in a case where a detection error of the flow sensor may not be corrected at an initial adjustment processing, each processing of the temperature obtaining means, the temperature deviation obtaining means, the supply flow rate deviation obtaining means, and the adjustment means is retried after the predetermined time has elapsed. Thus, a time to perform the adjustment processing is changed. As a result, an operation condition (in specific, a power generating condition) of the fuel cell system at the time of the retry of each processing of the temperature obtaining means, the temperature deviation obtaining means, the supply flow rate deviation obtaining means, and the adjustment means is changed, and a detection error of the flow sensor may be corrected appropriately in the changed power generation condition.

According to still another aspect of the disclosure, the control device performs each processing of the temperature obtaining means, the temperature deviation obtaining means, the supply flow rate deviation obtaining means, and the adjustment means in a case where the control device determines that the flow sensor needs to be calibrated.

Accordingly, a detection error of the flow sensor may be corrected at an appropriate timing.

According to a further aspect of the disclosure, the period in which the temperature is stable corresponds to a period of time to calibrate the temperature sensor.

Accordingly, the flow sensor may be calibrated at the same time as the temperature sensor of the combustion portion is calibrated. Therefore, a waiting time for waiting the temperature of the combustion portion to be stable before the calibration of the flow sensor may be utilized as the period of time to calibrate the temperature sensor. As a result, a total time of the waiting time of the control device and the period of time to calibrate the temperature sensor may be reduced.

According to another aspect of the disclosure, the period in which the temperature is stable corresponds to a period in which a power consumption pattern of an electric power load used by a user is learned and a consumed power of the electric power load, obtained on the basis of a learning result of the power consumption pattern, is stable.

Accordingly, it may not be necessary to establish a specific time to calibrate the flow sensor and the flow sensor is calibrated during the period in which the consumed power obtained on the basis of the learning result of the power consumption pattern is stable. Consequently, the user may be avoided from deteriorating economic efficiency and hours of use of the fuel cell system may be restricted from being reduced by the period of time to calibrate the flow sensor.

According to still another aspect of the disclosure, the period in which the temperature is stable corresponds to a period in which an electric power load used by a user is under low load.

Accordingly, the flow sensor is calibrated during the period in which the electric power load by the user is under low load; thereby, deterioration of power generation efficiency of the fuel cell may be restricted and the user may be avoided from deteriorating economic efficiency.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to an embodiment disclosed here;
Fig. 2 is a block diagram of the fuel cell system illustrated in Fig. 1;
Fig. 3 is a flowchart of a control program performed by a control device of the fuel cell system illustrated in Fig. 2;
Fig. 4 is a flow chart (of an adjustment start determination subroutine) performed by the control device of the fuel cell system illustrated in Fig. 2;
Fig. 5 is a flow chart (of a combustion-portion steady-state temperature value obtaining subroutine) performed by the control device of the fuel cell system illustrated in Fig. 2;
Fig. 6 is a flow chart (of a fuel flow rate error computation subroutine) performed by the control device of the fuel cell system illustrated in Fig. 2;
Fig. 7 is a flow chart (of an adjustment retry subroutine) performed by the control device of the fuel cell system illustrated in Fig. 2;
Fig. 8 is a map showing a correlation between a temperature deviation of a combustion portion and a fuel flow rate deviation;
Fig. 9 is a time chart showing an example in which the flowchart shown in Fig. 3 is performed; and
Fig. 10 is a table showing sensitivity of a temperature of the combustion portion relative to a source material, cathode air, a flow rate of water for reforming, and outside air temperature.

### DETAILED DESCRIPTION

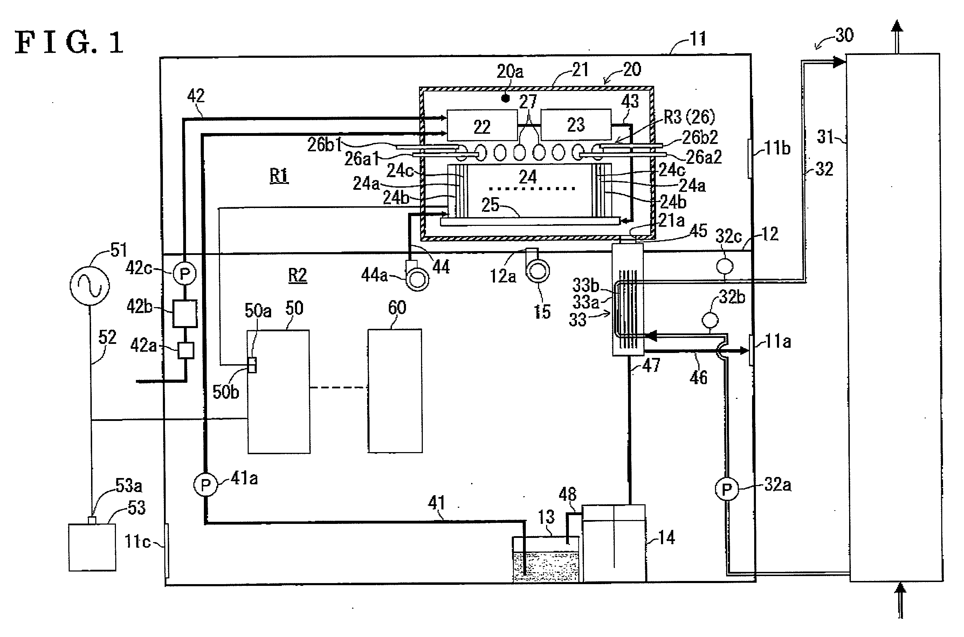

An embodiment will be explained with reference to the attached drawings. As illustrated in Fig. 1, a fuel cell system of the embodiment includes a case 11 having substantially a box shape, a fuel cell module 20, an exhaust heat recovery system 30, an inverter device 50, and a control device 60.

The case 11 includes a partition member 12 dividing an inside of the case 11 into a first chamber R1 serving as a first void and a second chamber R2 serving as a second void. The partition member 12 is a plate-shaped member dividing or separating the inside of the case 11 in a vertical direction (in an up-and-down direction). In the case 11, the first chamber R1 is arranged at an upper side relative to the partition member 12 and the second chamber R2 is arranged at a lower side relative to the partition member 12.

The fuel cell module 20 is accommodated within the first chamber R1 while having a distance (or a void) from an Inner wall surface of the first chamber R1. The fuel cell module 20 at least includes a casing 21 and a fuel cell 24. According to the present embodiment, the fuel cell module 20 includes the casing 21, an evaporating portion 22, a reforming portion 23, and the fuel cell 24.

The casing 21 made of an insulating material is substantially formed into a box shape. The casing 21 is supported via a support structure within the first chamber R1 while having the distance from the inner wall surface of the first chamber R1. The evaporating portion 22, the reforming portion 23, the fuel cell 24, and a combustion void R3 corresponding to a combustion portion 26 are arranged within the casing 21 in a state where the evaporating portion 22 and the reforming portion 23 are positioned at an upper side of the fuel cell 24.

A temperature sensor 20a for detecting an internal temperature of the casing 21 is set within the casing 21. A detection result of the temperature sensor 20a is transmitted to the control device 60.

The evaporating portion 22, which is heated by combustion gas, evaporates water (for a reforming reaction) supplied to the evaporating portion 22 to thereby generate water vapor and preheats a source material (fuel) supplied to the evaporating portion 22. The evaporating portion 22 mixes the water vapor generated in the aforementioned manner and the source material that is preheated, to therefore supply the mixture to the reforming portion 23. The source material its a gaseous fuel, for example, natural gas and LPG, and is a liquid fuel, for example, kerosene, gasoline, and methanol. According to the present embodiment, the natural gas is used as the source material.

A first end of a water supply pipe 41 is connected to the evaporating portion 22. A second end (a lower end) of the water supply pipe 41 is connected to a water tank 13 so as to be positioned within the water tank 13. A water pump 41 a is provided at the water supply pipe 41. The water pump 41 a supplies water to the evaporating portion 22 and controls or adjusts a supply volume of the water to the evaporating portion 22 (i.e., a supply flow rate per unit time of the water).

In addition, the source material from a fuel supply source is supplied via a fuel supply pipe 42 to the evaporating portion 22. A pair of fuel valves, a flow sensor 42a, a desulfurizer 42b, and a fuel pump 42c are provided in the mentioned order at the fuel supply pipe 42 from an upstream side in view of a flow direction of the source material. Each of the fuel valves is an electromagnetic on-off valve for opening and closing the fuel supply pipe 42. The flow sensor 42a detects a flow rate (per unit time) of the source material being supplied to the fuel cell 24 and transmits a detection result to the control device 60. The desulfurizer 42b removes sulfur content, for example, sulfur compound in the source material. The fuel pump 42c is a supply device supplying the source material to the fuel cell 24 and adjusts a supply volume (a supply flow rate per unit time) of the source material from the fuel supply source depending on a control command value from the control device 60,

The reforming portion 23 is heated by the combustion gas so as to receive heat necessary for a water vapor reforming reaction. As a result, the reforming portion 23 generates a reformed gas from a mixed gas (of the source material and the water vapor) supplied from the evaporating portion 22. Specifically, an inside of the reforming portion 23 is filled with a catalyst, for example, ruthenium catalyst (Ru catalyst) or nickel catalyst (Ni catalyst). The mixed gas supplied from the evaporating portion 22 reacts by means of the catalyst so as to be reformed, thereby generating hydrogen gas and carbon monoxide gas (the water vapor reforming reaction). At the same time, carbon monoxide generated during the water vapor reforming reaction and the water vapor react so as to be converted to hydrogen gas and carbon dioxide, i.e., a carbon monoxide shift reaction occurs. The thus generated gas (the reformed gas) is supplied to a fuel electrode (an anode) of the fuel cell 24. The reformed gas includes hydrogen, carbon monoxide, carbon dioxide, water vapor, natural gas (methane gas) that is not reformed, and water (water vapor) that is not used for the water vapor reforming reaction. The water vapor reforming reaction is an endothermic reaction while the carbon monoxide shift reaction is an exothermic reaction.

The fuel cell 24 includes a lamination of plural cells 24a each having the fuel electrode, an air electrode (an oxidant electrode), and an electrolyte disposed between the fuel electrode and the air electrode. The fuel cell 24 according to the present embodiment is a solid oxide fuel cell (SOFC) where zirconium oxide serving as a solid oxide is used as the electrolyte. The fuel electrode of the fuel cell 24 is supplied with hydrogen, carbon monoxide, and methane gas, for example, as fuel. An operating temperature of the fuel cell 24 is substantially in a range from 400 degrees C to 1,000 degrees C, Not only hydrogen is used as the fuel but also natural gas or coal gas may be directly used as the fuel. In a case where the natural gas or the coal gas is directly used as the fuel, the reforming portion 23 may be omitted.

A fuel flow passage 24b through which the reformed gas serving as the fuel flows is formed at the fuel electrode of each of the cells 24a. An air flow passage 24c through which air (cathode air) serving as oxidant gas flows is formed at the air electrode of each of the cells 24a.

The fuel cell 24 is placed on a manifold 25. The reformed gas is supplied from the reforming portion 23 to the manifold 25 via a reformed gas supply pipe 43. A lower end (a first end) of the fuel flow passage 24b is connected to a fuel lead-out port formed at the manifold 25. The reformed gas led out from the fuel lead-out port of the manifold 25 is introduced from the lower end of the fuel flow passage 24b and is discharged from an upper end (a second end) of the fuel flow passage 24b. The cathode air sent from a cathode air blower 44a as a cathode air sending device flows through a cathode air supply pipe 44 to be supplied from a lower end of the air flow passage 24c and to be discharged from an upper end of the air flow passage 24c.

The cathode air blower 44a is arranged within the second chamber R2. The cathode air blower 44a suctions air within the second chamber R2 and discharges the air to the air electrode of the fuel cell 24. A volume of the air discharged from the cathode air blower 44a is controlled or adjusted, for example, on the basis of a load electric power energy (power consumption) of the fuel cell 24.

In the fuel cell 24, electricity is generated by the fuel supplied to the fuel electrode and the oxidant gas supplied to the air electrode (i.e., a power generation of the fuel cell 24). Reactions indicated by a chemical formula (1) and a chemical formula (2) as below occur at the fuel electrode while a reaction indicated by a chemical formula (3) as below occurs at the air electrode. In other words, oxide ion (O²⁻) generated at the air electrode penetrates through the electrolyte so as to react with hydrogen at the fuel electrode, thereby generating electric energy. As a result, the reformed gas and the oxidant gas (air) that have not been used in the power generation are discharged from the fuel flow passage 24b and the air flow passage 24c respectively.

(1) H₂ + O²⁻ → H₂O + 2e⁻

(2) CO + O²⁻ → CO₂ + 2e⁻

(3) 1/2O₂ + 2e⁻ → O²⁻

The reformed gas (anode-off gas) that has not been used in the power generation is discharged from the fuel flow passage 24b and the air flow passage 24c, and the reformed gas is burned in the combustion void R3 formed between the fuel cell 24 and the evaporating portion 22 (the reforming portion 23), by means of the oxidant gas (cathode-off gas) that has not been used in the power generation. The resulting combustion gas (flame) heats the evaporating portion 22 and the reforming portion 23, and further brings an inside of the fuel cell module 20 to be maintained at an operating temperature. Afterward, the combustion gas is discharged from an exhaust opening 21 a to an outside of the fuel cell module 20. As described above, the combustion void R3 serves as the combustion portion 26 in which the anode-off gas and the cathode-off gas (the oxidant gas) from the fuel cell 24 are burned to therefore heat the reforming portion 23.

In the combustion portion 26 (the combustion void R3), the anode-off gas is burned to therefore generate a flaming portion 27, i.e., flame. A pair of ignition heaters 26a1 and 26a2 is provided at the combustion portion 26 so as to ignite the anode-off gas. In addition, a temperature sensor 26b is provided at the combustion portion 26. The temperature sensor 26b is formed by a pair of thermocouples 26b1 and 26b2. A temperature detecting portion is arranged at each of the thermocouples 26b1 and 26b2. The thermocouple 26b1 is arranged between the evaporating portion 22 and the fuel cell 24 while the thermocouple 26b2 is arranged between the reforming portion 23 and the fuel cell 24. A detection result, i.e., a detection signal (an output signal) of each of the thermocouples 26b1 and 26b2 is transmitted to the control device 60.

The exhaust heat recovery system 30 performs heat exchange between exhaust heat of the fuel cell 24 and hot water (i.e., water or storage water stored in a hot water storage tank 31) so that the exhaust heat is recovered and stored in the storage water. The exhaust heat recovery system 30 includes the hot water storage tank 31 storing the water), a water circulation line 32 where the water is circulated, and a heat exchanger 33 where the heat exchange is performed between exhaust combustion gas from the fuel cell module 20 and the water.

The hot water storage tank 31 includes a single column-shaped container in which the water is stored in such a manner that a temperature at an upper portion of the water in the container is highest, is gradually decreasing towards a lower portion of the water, and is lowest at the lower portion of the water in the container. Water, for example, tap water (at relatively a low temperature) is supplied to a lower portion of the container of the hot water storage tank 31. The water (hot water) at a relatively high temperature stored in the hot water storage tank 31 is discharged from an upper portion of the container of the hot water storage tank 31.

A first end of the water circulation line 32 is connected to the lower portion of the hot water storage tank 31 while a second end of the water circulation line 32 is connected to the upper portion of the hot water storage tank 31. A water circulation pump 32a serving as a water circulation means, a first temperature sensor 32b, the heat exchanger 33, and a second temperature sensor 32c are provided at the water circulation line 32 in the mentioned order from the first end towards the second end thereof. The water circulation pump 32a suctions the water (the storage water) at the lower portion of the hot water storage tank 31 so that the water flows in an arrow direction in Fig. 1 through the water circulation line 32 to be discharged and supplied to the upper portion of the hot water storage tank 31. A flow rate (a sending amount) of the water flowing through the water circulation line 32 is controlled by the water circulation pump 32a. The sending amount of the water by the water circulation pump 32a is controlled so that a temperature detected by the second temperature sensor 32c (i.e., a temperature of the water at an entry side of the hot water storage tank 31) may be at a predetermined temperature or within a predetermined temperature range.

The first temperature sensor 32b is provided at a portion on the water circulation line 32 where the storage water flows towards the heat exchanger 33, i.e., provided between the heat exchanger 33 and the hot water storage tank 31. The first temperature sensor 32b detects the temperature of the water at an entry side of the heat exchanger 33, i.e., the temperature of the water at an exit side of the hot water storage tank 31. The first temperature sensor 32b transmits a detection result to the control device 60.

The second temperature sensor 32c is provided at a portion on the water circulation line 32 where the storage water flows from the heat exchanger 33. The second temperature sensor 32c detects the temperature of the water at an exit side of the heat exchanger 33, i.e., the temperature of the water at the entry side of the hot water storage tank 31. The second temperature sensor 32c transmits a detection result to the control device 60.

The heat exchanger 33 is supplied with the exhaust combustion gas from the fuel cell module 20 and the storage water from the hot water storage tank 31 so as to perform the heat exchange between the exhaust combustion gas and the storage water. The heat exchanger 33 is arranged within the case 11. According to the present embodiment, the heat exchanger 33 is provided at a lower side of the fuel cell module 20. At least a lower portion of the heat exchanger 33 penetrates through the partition member 12 and projects to the second chamber R2.

The heat exchanger 33 includes a casing 33a. A connection pipe 45 is connected to an upper portion of the casing 33a. The connection pipe 45 is connected to the exhaust opening 21 a provided at a lower portion of the casing 21 of the fuel cell module 20 so that the exhaust combustion gas is discharged from the exhaust opening 21a. An exhaust gas pipe 46 connected to a first exhaust port 11a is connected to a lower portion of the casing 33a. A condensed water supply pipe 47 connected to a deionizer 14 is connected to a bottom portion of the casing 33a. A heat exchanging portion 33b serving as a condensation portion connected to the water circulation line 32 is provided within the casing 33a.

In the heat exchanger 33 having the aforementioned configuration, the exhaust combustion gas from the fuel cell module 20 flows through the connection pipe 45 into the casing 33a. In a case where the exhaust combustion gas flows through the heat exchanging portion 33b where the storage water flows, the heat exchange is performed between the exhaust combustion gas and the storage water; thereby, the exhaust combustion gas is condensed and cooled. The exhaust combustion gas after being condensed flows through the exhaust gas pipe 46 to be discharged via the first exhaust port 11 a to an outside of the case 11. Condensed water resulting from the aforementioned heat exchange flows through the condensed water supply pipe 47 so as to be supplied to the deionizer 14 (i.e., the condensed water drops by its own weight). On the other hand, the storage water flowing into the heat exchanging portion 33b is heated so as to flow out towards the upper portion of the hot water storage tank 31.

The fuel cell system of the present embodiment also includes the water tank 13 and the deionizer 14. The water tank 13 and the deionizer 14 are arranged within the second chamber R2. The water tank 13 stores pure water supplied from the deionizer 14. A water volume sensor (a water level sensor) is provided within the water tank 13 so as to detect a volume of the pure water in the water tank 13. The water volume sensor is a water-level gauge, for example, a float-type or capacitance-type water level indicator. The water volume sensor transmits a detection signal to the control device 60.

The deionizer 14 incorporates activated carbon and ion-exchange resin. For example, the deionizer 14 is filled with the flaky activated carbon and the grained ion-exchange resin. In addition, depending on a state of treatment-object water, a hollow fiber filter may be provided at the deionizer 14. The deionizer 14 purifies the condensed water from the heat exchanger 33 by means of the activated carbon and the ion-exchange resin. The deionizer 14 is connected via a pipe 48 to the water tank 13. The pure water in the deionizer 14 flows through the pipe 48 to be supplied to the water tank 13.

The fuel cell system includes an air inlet port 11c formed at the case 11 forming the second chamber R2, an air outlet port 11b formed at the case 11 forming the first chamber R1, and a ventilation air blower 15 provided at an air inlet port 12a formed at the partition member 12. In a case where the ventilation air blower 15 is brought into operation, outside air is suctioned through the air inlet port 11c to the second chamber R2 and is sent to the first chamber R1 by the ventilation air blower 15. The air in the first chamber R1 is discharged therefrom through the air outlet port 11 b to the outside of the case 11.

The fuel cell system also includes the inverter device 50. The inverter device 50 includes a first function for receiving a DC (direct-current) voltage output from the fuel cell 24 and converting the DC voltage into a predetermined AC (alternating-current) voltage so as to output the AC voltage to a power line 52 connected to an alternating system power supply 51 (i.e., a commercial power supply) (hereinafter simply referred to as a system power supply 51) and an external electric power load 53 (hereinafter simply referred to as an electric power load 53). The inverter device 50 also includes a second function for receiving an AC voltage from the system power supply 51 via the power line 52 and converting the AC voltage into a predetermined DC voltage so as to output the DC voltage to an auxiliary machinery and/or the control device 60.

The inverter device 50 includes a voltage sensor 50a detecting an output voltage outputted from the fuel cell 24 and a current sensor 50b detecting an output electric current outputted from the fuel cell 24. The voltage sensor 50a and the current sensor 50b transmit respective detection results to the control device 60.

The system power supply 51 (the commercial power supply) supplies electric power to the electric power load 53 via the power line 52 connected to the system power supply 51. The fuel cell 24 is connected via the inverter device 50 to the power line 52. The electric power load 53 is a load driven by an AC power source, i.e., an electrical appliance, for example, a hair drier, a refrigerator, and a television. A current sensor 53a for detecting an electric current of power consumption by the electric power load 53 is provided at the electric power load 53. A detection result of the current sensor 53a is transmitted to the control device 60.

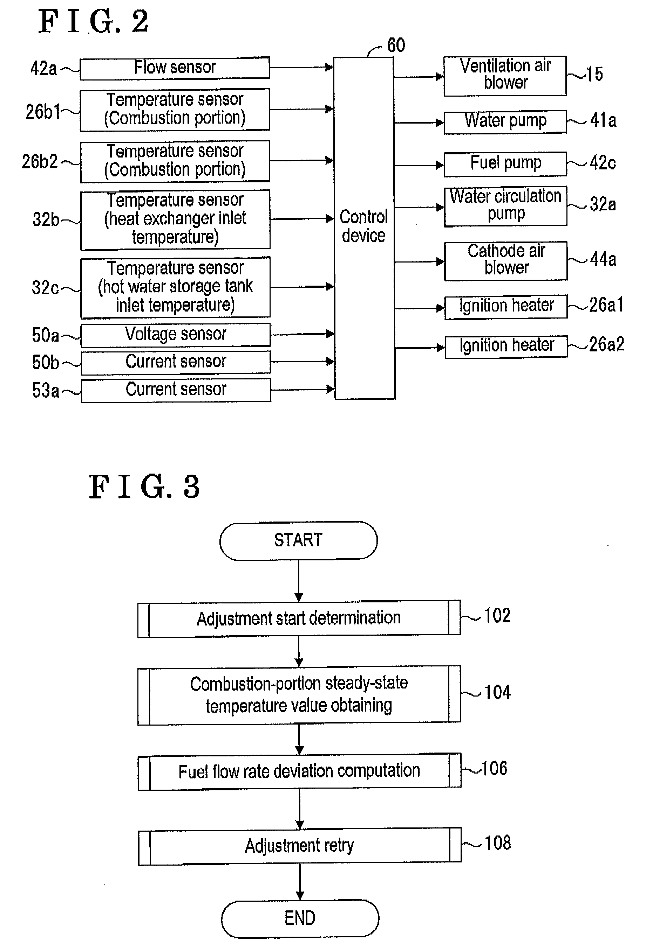

Further, the fuel cell system includes the control device 60. As illustrated in. Fig. 2, the aforementioned temperature sensors 26b (26b1 and 26b2), 32b, and 32c, the flow sensor 42a, the voltage sensor 50a, the current sensors 50b and 53a, the pumps 32a, 41 a, and 42c, the blowers 15 and 44a, and the ignition heaters 26a1 and 26a2 are connected to the control device 60. The control device 60 includes a microcomputer having an input-output interface (I/O interface), a CPU, a RAM, and a ROM all of which are connected to one another via a bus. The CPU has a function, for example, to control the fuel pump 42c. The RAM temporarily stores a variable necessary to perform a program for controlling the fuel pump 42c and the ROM stores such program.

Next, an operation of the fuel cell system will be explained as follows. When a start switch is turned on (or when the fuel cell system automatically starts operating at a start time preset by a user), the control device 60 starts a control program corresponding to a flowchart shown in Fig. 3. The control device 60 sets each flag (which will be described below) at OFF before starting the control program of Fig. 3.

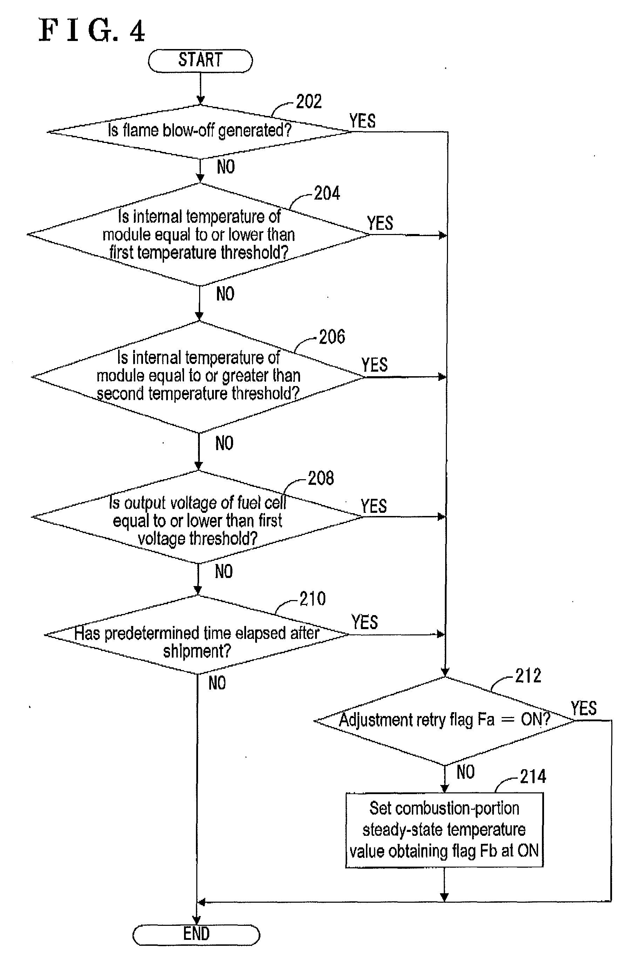

In step 102, the control device 60 determines whether or not to start an adjustment processing for the flow sensor 42a. In particular, the control device 60 performs a first program corresponding to an adjustment start determination subroutine shown in Fig. 4. In steps 202, 204, 208, 208, and 210, the control device 60 compares a detection result by the flow sensor 42a (a flow rate of the source material, which is detected by the flow sensor 42a) with a flow rate of the source material at an initial use stage (at which no deviation is generated). Consequently, in a case where a difference (deviation) is generated between the detection result and the flow rate of the source material at the initial use stage, the control device 60 determines whether or not the flow sensor 42a needs to be calibrated (adjusted). When it is determined by the control device 60 that the flow sensor 42a needs to be adjusted, the control device 60 starts adjusting the flow sensor 42a. Meanwhile, when it is determined by the control device 60 that the flow sensor 42a does not need to be adjusted, the control device 60 does not adjust the flow sensor 42a.

In step 202, the control device 60 determines whether or not flame blow-off is frequently generated in the combustion portion 26, thereby judging whether or not the flow sensor 42a needs to be calibrated (adjusted). Whether or not the flame blow-off is generated is determined by that a temperature of the combustion portion 26 after ignition for the combustion portion 26 is equal to or lower than a temperature of the combustion portion 26 at the time of the ignition. For example, a flow rate of the source material, which is detected by the flow sensor 42a may increase or decrease because of a detection error of the flow sensor 42a; therefore, fuel balance of the source material is disturbed and thus flame blow-off may be easily generated. Accordingly, in a case where it is determined by the control device 60 several times during a predetermined period of time (for example, several times a week or a month) that flame blow-off Is generated, the control device 60 judges that the flame blow-off is frequently generated in the combustion portion 26.

In step 204, the control device 60 determines whether or not an internal temperature of the fuel cell module 20 is equal to or lower than a first temperature threshold, thereby judging whether or not the flow sensor 42a needs to be calibrated (modified). For example, a flow rate of the source material, which is detected by the flow sensor 42a may increase or decrease because of a detection error of the flow sensor 42a; therefore, an amount of heat inputted to the fuel cell module 20 increases or decreases and thus the internal temperature of the fuel cell module 20 may be equal to or lower than the first temperature threshold. Accordingly, in specific, the control device 60 obtains an internal temperature of the fuel cell module 20, which is detected by the temperature sensor 20a, during a steady operation (the power generation) of the fuel cell 24. As a result, in a case where the internal temperature of the fuel cell module 20 is equal to or lower than the first temperature threshold, the control device 60 determines that the flow sensor 42a needs to be calibrated (adjusted).

In step 206, the control device 60 determines whether or not an internal temperature of the fuel cell module 20 is equal to or greater than a second temperature threshold, thereby judging whether or not the flow sensor 42a needs to be calibrated (adjusted). For example, a flow rate of the source material, which is detected by the flow sensor 42a may increase or decrease because of a detection error of the flow sensor 42a; therefore, an amount of heat inputted to the fuel cell module 20 increases or decreases and thus the internal temperature of the fuel cell module 20 may be equal to or greater than the second temperature threshold. Accordingly, in specific, the control device 60 obtains an internal temperature of the fuel cell module 20, which is detected by the temperature sensor 20a, during the steady operation (the power generation) of the fuel cell 24. Consequently, in a case where the internal temperature of the fuel cell module 20 is equal to or greater than the second temperature threshold, the control device 60 determines that the flow sensor 42a needs to be calibrated (adjusted).

In step 208, the control device 60 determines whether or not an output voltage of the fuel cell 24 is equal to or lower than a first voltage threshold, thereby judging whether or not the flow sensor 42a needs to be calibrated (adjusted). For example, a flow rate of the source material, which is detected by the flow sensor 42a may decrease because of a detection error of the flow sensor 42a; therefore, the fuel cell 24 becomes a shortage of the source material. In a condition where the fuel cell 24 is the shortage of the source material, an electric current is swept; therefore, the output voltage of the fuel cell 24 may decrease. Accordingly, in specific, the control device 60 obtains an output voltage of the fuel cell 24, which is detected by the voltage sensor 50a, during the steady operation (the power generation) of the fuel cell 24. Consequently, in a case where the output voltage is equal to or lower than the first voltage threshold, the control device 60 determines that the flow sensor 42a needs to be calibrated (adjusted).

In step 210, the control device 60 determines whether or not a predetermined time (for example, a month) has elapsed after shipment of the fuel cell system, thereby judging whether or not the flow sensor 42a needs to be calibrated (adjusted). Alternatively, the control device 60 may determine whether or not the flow sensor 42a needs to be calibrated (adjusted), by utilizing a total operation (used) hours of the fuel cell system after the fuel cell system is installed or set. This is because a detection value of the flow sensor 42a may vary or deviate with age, for example, at a time after the aforementioned predetermined time (for example, a month) has elapsed, i.e., after the shipment of the fuel cell system.

In a case where it is determined by the control device 60 in one of steps 202, 204, 206, 208, and 210 that the flow sensor 42a needs to be calibrated, the control device 60 shifts the first program from one of steps 202, 204, 206, 208, and 210 to step 212. On the other hand, in a case where it is not determined by the control device 60 in one of steps 202, 204, 206, 208, and 210 that the flow sensor 42a needs to be calibrated, the control device 60 ends the first program (the adjustment start determination subroutine).

In a case where an adjustment retry flag Fa indicates ON in step 212, YES is determined by the control device 60 and the control device 60 ends the first program. On the other hand, in a case where the adjustment retry flag Fa indicates OFF in step 212, the first program is shifted to step 214. In step 214, the control device 60 sets a combustion-portion steady-state temperature value obtaining flag Fb at ON.

The adjustment retry flag Fa is a flag indicating whether or not an adjustment retry processing is in operation. In a case where the adjustment retry flag Fa indicates ON, the adjustment retry processing is in operation. Meanwhile, in a case where the adjustment retry flag Fa indicates OFF, the adjustment retry processing in not in operation. In addition, the combustion-portion steady-state temperature value obtaining flag Fb is a flag indicating whether or not a combustion-portion steady-state temperature value obtaining processing is in operation. In a case where the combustion-portion steady-state temperature value obtaining flag Fb indicates ON, the combustion-portion steady-state temperature value obtaining processing is in operation. Meanwhile, in a case where the combustion-portion steady-state temperature value obtaining flag Fb indicates OFF, the combustion-portion steady-state temperature value obtaining processing is not in operation.

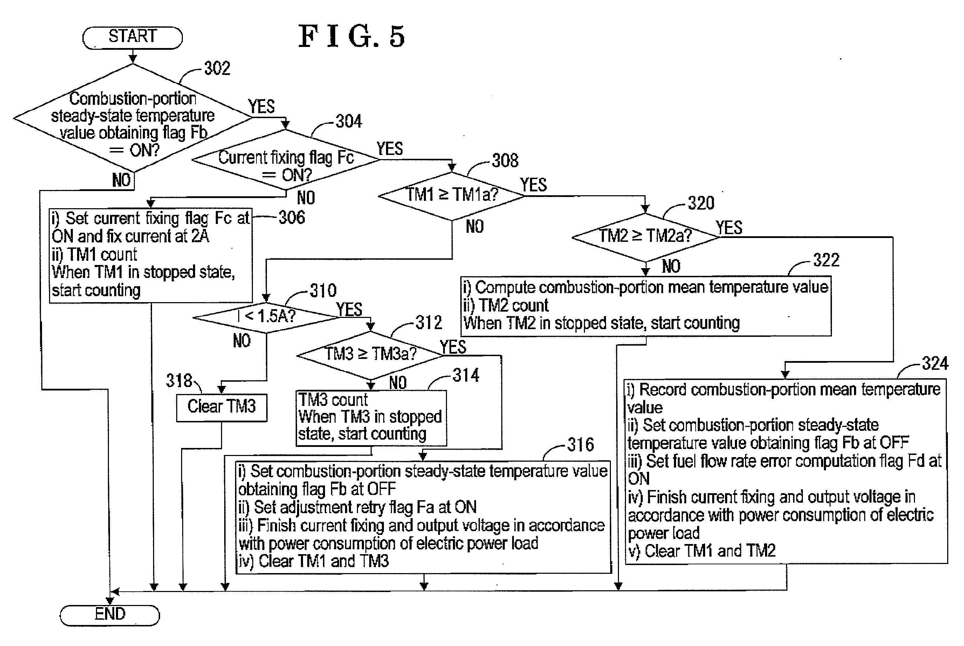

After step 102, the control program of the control device 60 shifts to step 104 shown in Fig. 3. In step 104, the control device 60 performs the combustion-portion steady-state temperature value obtaining processing for obtaining a steady-state temperature value of the combustion portion 26. In particular, the control device 60 performs a second program corresponding to a combustion-portion steady-state temperature value obtaining subroutine shown in Fig. 5. In a case where the combustion-portion steady-state temperature value obtaining flag Fb indicates ON in step 302, YES is determined by the control device 60 and the control device 60 shifts the second program from step 302 to step 304. On the other hand, In a case where the combustion-portion steady-state temperature value obtaining flag Fb indicates OFF in step 302, NO is determined by the control device 60 and the control device 60 ends the second program (the combustion-portion steady-state temperature value obtaining subroutine).

In a case where an electric current fixing flag (current fixing flag) Fc indicates ON in step 304, YES is determined by the control device 60 and the control device 60 shifts the second program from step 304 to step 308. On the other hand, in a case where the electric current fixing flag Fc indicates OFF in step 304, NO is determined by the control device 60 and the control device 60 shifts the second program from step 304 to step 306. The electric current fixing flag Fc is a flag indicating whether or not an electric current fixing processing for keeping an output electric current of the fuel cell 24 constant is in operation. In a case where the electric current fixing flag Fc indicates ON, the electric current fixing processing is in operation. On the other hand, in a case where the electric current fixing flag Fc indicates OFF, the electric current fixing processing is not in operation.

In step 306, the control device 60 sets the electric current fixing flag Fc at ON and keeps the output electric current of the fuel cell 24 constant (for example, at 2A). In particular, the control device 60 adjusts the fuel pump 42c so as to supply the source material at a constant supply flow rate F, and keeps the output electric current of the fuel cell 24 constant (for example, at 2A). Further, the control device 60 controls a first timer TM1 to count. In an initial cycle (in a case where the first timer TM1 is in a stopped state), the control device 60 commands the first timer TM1 to start counting.

When the first timer TM1 starts counting, the output electric current of the fuel cell 24 is set at a value at which an amount of heat of the anode-off gas is smallest and at which sensitivity of a temperature of the combustion portion 26 relative to a detection error of the flow sensor 42a is highest. Therefore, the flow sensor 42a may be calibrated with a high degree of accuracy.

In step 308, until a first predetermined time TM1 a (for example, two hours) or longer is counted by the first timer TM1, NO is determined by the control device 60 and the control device 60 shifts the second program from step 308 to step 310. During a period from the time when it is determined by the control device 60 that the flow sensor 42a needs to be adjusted and such adjustment is started to the time when the first predetermined time TM1a has elapsed, the control device 60 waits a temperature of the combustion portion 26 to be stable.

During the period in which the control device 60 is waiting the temperature of the combustion portion 26 to be stable, the control device 60 fixes the output electric current of the fuel cell 24 to be constant (at 2A) in step 306. However, in a case where an actual current consumption of the electric power load 53 becomes below 2A, a reverse power flow occurs. For example, during late night hours, the electric power load 53 consumes less electric power; therefore, an electric current of the electric power load 53 may decrease to equal to or lower than 2A. The reverse power flow is prohibited in the fuel cell 24 (the fuel cell 24 is prohibited from applying electricity to the system power supply 51). Therefore, in a case where the power consumption of the electric power load 53 decreases, the output electric current of the fuel cell 24 decreases in accordance with the decrease of the power consumption of the electric power load 53. As a result, the current consumption of the electric power load 53 may be equal to or lower than 2A.

In order to avoid the output electric current of the fuel cell 24 from decreasing in accordance with the decrease of the power consumption of the electric power load 53, the control device 60 performs processing of steps from 310 to 318. In other words, for example, in a case where a state in which a total electric current consumption of the electric power load 53 is equal to or lower than 1.5A continues for 30 seconds or longer, a flow rate of the anode-off gas from the fuel cell 24 may not be kept stable so that the output electric current of the fuel cell 24 is constant at 2A. Therefore, the control device 60 stops the combustion-portion steady-state temperature value obtaining processing and performs the adjustment retry processing.

In step 310, the control device 60 detects a current consumption in the electric power load 53 by the current sensor 53a and determines whether or not the current consumption detected by the current sensor 53a is below a predetermine current (1.5A). In a case where the current consumption detected by the current sensor 53a is below the predetermine current (1.5A), YES is determined by the control device 60 and the control device 60 shifts the second program from step 310 to step 312. Meanwhile, in a case where the current consumption detected by the current sensor 53a is equal to or greater than the predetermine current (1.5A), NO is determined by the control device 60 and the control device 60 shifts the second program from step 310 to step 318.

In step 312, the control device 60 determines whether or not a third predetermined time TM3a (for example, 30 seconds) or longer is counted by a third timer TM3. In step 312, until the third predetermined time TM3a (for example, 30 seconds) or longer is counted by the third timer TM3, NO is determined by the control device 60 and the control device 60 shifts the second program from step 312 to step 314. Meanwhile, in a case where the third predetermined time TM3a (for example, 30 seconds) or longer is counted by the third timer TM3 in step 312, YES is determined by the control device 60 and the control device 60 shifts the second program from step 312 to step 316.

In step 314, the control device 60 controls the third timer TM3 to count. In an initial cycle (in a case where the third timer TM3 is in a stopped state), the control device 60 commands the third timer TM3 to start counting.

In step 316, the control device 60 sets the combustion-portion steady-state temperature value obtaining flag Fb at OFF so as to end the combustion-portion steady-state temperature value obtaining processing. In addition, the control device 60 sets the adjustment retry flag Fa at ON so as to retry the adjustment retry processing at a time interval after the combustion-portion steady-state temperature value obtaining processing ends. Further, the control device 60 ends the electric current fixing processing and commands the fuel cell 24 to generate electricity in accordance with the power consumption of the electric power load 53. Furthermore, the control device 60 clears the first and third timers TM1 and TM3. In a case where NO is determined by the control device 60 in step 310 as described above, the control device 60 shifts the second program from step 310 to step 318 and clears the third timer TM3.

In a case where the aforementioned period (a waiting time) during which the control device 60 is waiting the temperature of the combustion portion 26 to be stable has elapsed without the decrease of the actual current consumption of the electric power load 53 to below 2A, YES is determined by the control device 60 in step 308 and the control device 60 shifts the second program from step 308 to step 320.

In step 320, until a second predetermined time TM2a or longer (for example, 10 minutes) is counted by a second timer TM2, NO is determined by the control device 60 and the control device 60 shifts the second program from step 320 to step 322. In step 322, the control device 60 obtains temperatures of the combustion portion 26, which are detected by the thermocouple 26b1 or 26b2 from the timing the second timer TM2 has started counting. In addition, the control device 60 computes a mean value of the temperatures of the combustion portion 26, which are obtained during a period of time from the time when the second timer TM2 has started counting to the present time. Furthermore, the control device 60 controls to the second timer TM2 to count. In an initial cycle (in a case where the second timer TM2 is in a stopped state), the control device 60 commands the second timer TM2 to start counting.

In a case where the second predetermined time TM2a (for example, 10 minutes) or longer is counted by the second timer TM2 in step 320, YES is determined by the control device 60 and the control device 60 shifts the second program from step 320 to step 324. In step 324, the control device 60 computes a mean value of temperatures of the combustion portion 26, which are obtained during a period from the time when the second timer TM2 has started counting to the time when the second predetermined time TM2a has elapsed, and the control device 60 records the mean value. Further, the control device 60 sets the combustion-portion steady-state temperature value obtaining flag Fb at OFF so as to end the combustion-portion steady-state temperature value obtaining processing. Furthermore, the control device 60 sets a fuel flow rate error computation flag Fd at ON so as to start a fuel flow rate error computation processing. Moreover, the control device 60 ends the electric current fixing processing and controls the fuel cell 24 to generate electricity in accordance with the power consumption of the electric power load 53. In addition, the control device 60 clears the first and second timers TM1 and TM2.

The fuel flow rate error computation flag Fd is a flag indicating whether or not the fuel flow rate error computation processing is in operation. In a case where the fuel flow rate error computation flag Fd indicates ON, the fuel flow rate error computation processing is in operation. Meanwhile, in a case where fuel flow rate error computation flag Fd indicates OFF, the fuel flow rate error computation process is not in operation.

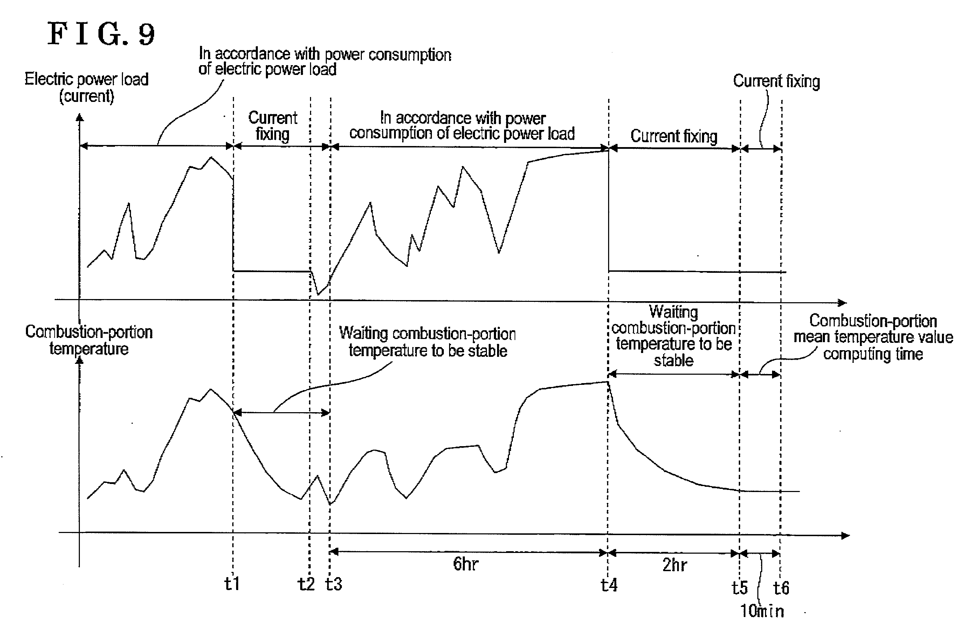

Each processing of the aforementioned step 304 and steps from 320 to 324 controls the fuel pump 42c (the supply device) to supply the source material at the constant supply flow rate F, thereby obtaining a temperature of the combustion portion 26, which is detected by the temperature sensor 26b during a period in which the temperature of the combustion portion 26 is stable, i.e., during a period between time t5 and time t6 shown in Fig. 9 (the processing for obtaining the temperature of the combustion portion 26 corresponds to a temperature obtaining means). In addition, according to the embodiment, the temperature obtained by the temperature obtaining means is, for example, a mean value of temperatures of the combustion portion 26. Alternatively, the temperature obtained by the temperature obtaining means may be a different value indicating a temperature of the combustion portion 26.

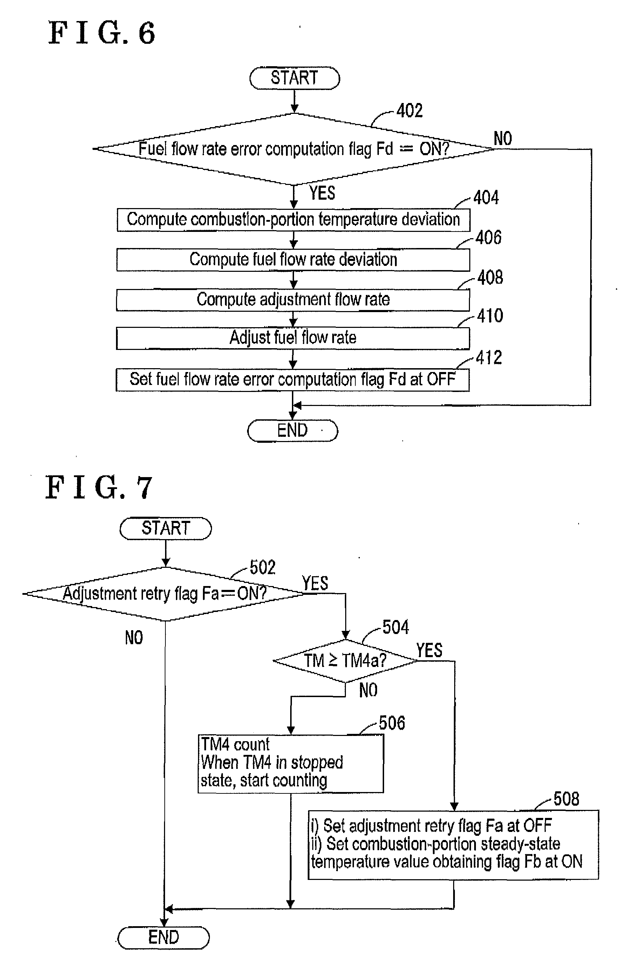

After step 104, the control program of the control device 60 shifts to step 106 shown in Fig. 3. In step 106, the control device 60 performs the fuel flow rate error computation processing for computing a detection error of the flow sensor 42a for the source material. In particular, the control device 60 performs a third program corresponding to a fuel flow rate error computation subroutine shown in Fig. 6. In a case where the fuel flow rate error computation flag Fd indicates ON in step 402, YES is determined by the control device 60 and the control device 60 shifts the third program from step 402 to step 404. On the other hand, in a case where the fuel flow rate error computation flag Fd indicates OFF in step 402, NO is determined by the control device 60 and the control device 60 ends the third program (the fuel flow rate error computation subroutine).

In step 404, the control device 60 computes a temperature deviation of the combustion portion 26 from a reference temperature of the combustion portion 26. The temperature deviation is a variable value relative to the reference temperature which is measured at the shipment of the fuel cell system or at the initial use stage of the fuel cell system and which is stored in advance. In other words, the control device 60 subtracts the precomputed mean value of the temperatures of the combustion portion 26 from the reference temperature of the combustion portion 26, thereby obtaining the temperature deviation of the combustion portion 26. Step 404 (corresponding to a temperature deviation obtaining means) obtains the temperature deviation of the combustion portion 26, which is a difference between the reference temperature of the combustion portion 26 and the temperature of the combustion portion 26, which is obtained by the temperature obtaining means (in specific, the temperature of the combustion portion 26 is the mean value of the temperatures of the combustion portion 26).

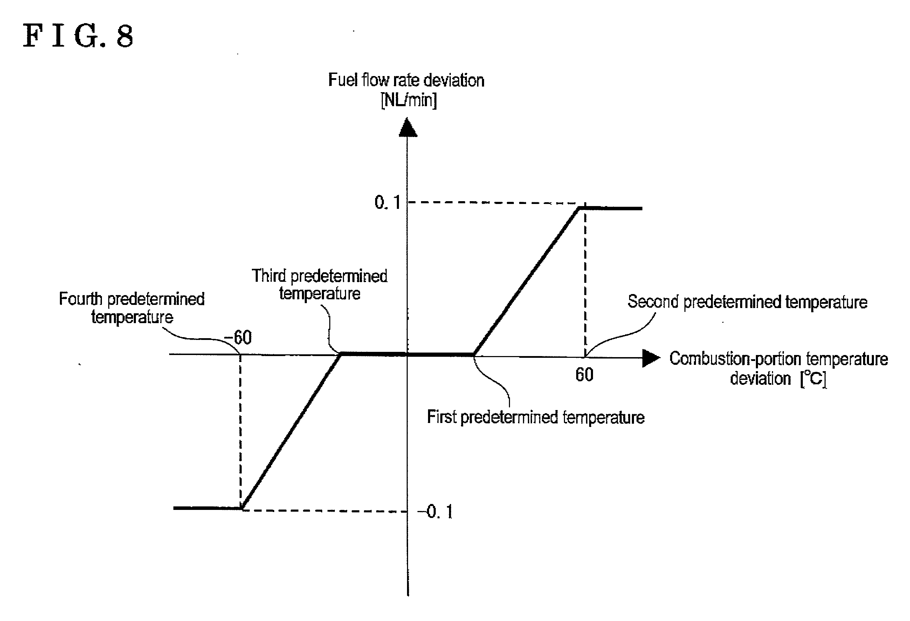

Next, in step 406, the control device 60 computes a fuel flow rate deviation (i.e., supply flow rate deviation) which is a detection error of the flow sensor 42a for the source material. In other words, from a map (shown in Fig. 8), the control device 60 computes a deviation of the flow rate of the source material, i.e., the fuel flow rate deviation, relative to the temperature deviation of the combustion portion 26, which is computed in advance. The map of Fig. 8 indicates a relation of the deviation of the supply flow rate of the source material relative to the temperature deviation of the combustion portion 26, which is obtained from an experiment in advance. Step 406 (corresponding to a supply flow rate deviation obtaining means) obtains the deviation of the supply flow rate of the source material from the temperature deviation of the combustion portion 26, which is obtained by the temperature deviation obtaining means.

When the temperature deviation of the combustion portion 26 is equal to or lower than a first predetermined temperature in the condition where the temperature deviation is a positive value in the map shown in Fig. 8, the fuel flow rate deviation is constant at 0. When the temperature deviation of the combustion portion 26 is greater than the first predetermined temperature and equal to or lower than a second predetermined temperature in the condition where the temperature deviation is a positive value in the map shown in Fig. 8, the fuel flow rate deviation is set so as to increase as the temperature deviation increases. When the temperature deviation of the combustion portion 26 is greater than the second predetermine temperature in the condition where the temperature deviation is a positive value in the map shown in Fig. 8, the fuel flow rate deviation is constant at a predetermined value, for example, 0.1 NL/min. In addition, when the temperature deviation of the combustion portion 26 is equal to or greater than a third predetermined temperature in the condition where the temperature deviation is a negative value in the map shown in Fig. 8, the fuel flow rate deviation is constant at 0. When the temperature deviation of the combustion portion 26 is lower than the third predetermined temperature and equal to or grater than a fourth predetermined temperature in the condition where the temperature deviation is a negative value in the map shown in Fig. 8, the fuel flow rate deviation is set so as to decrease as the temperature deviation decreases. When the temperature deviation of the combustion portion 26 is lower than the fourth predetermined temperature in the condition where the temperature deviation is a negative value in the map shown in Fig. 8, the fuel flow rate deviation is constant at a predetermined value, for example, -0.1 NL/min.

After step 406, in step 408, the control device 60 computes an adjustment flow rate of the source material. In specific, the control device 60 computes the adjustment flow rate by adding a fuel flow rate deviation computed presently to an adjustment flow rate previously computed. Afterward, in step 410, the control device 60 adjusts the fuel flow rate. More specifically, the control device 60 computes the adjustment flow rate by adding the adjustment flow rate computed presently to a target supply flow rate of the source material, or by adding the adjustment flow rate computed presently to a detection result by the flow sensor 42a. Step 410 (corresponding to an adjustment means) adjusts the supply flow rate of the source material on the basis of the supply flow rate deviation obtained by the supply flow rate deviation obtaining means. After step 410, in step 412, the control device 60 sets the fuel flow rate error computation flag Fd at OFF so as to end the fuel flow rate error computation processing.

After step 106, the control program of the control device 60 shifts to step 108 shown in Fig. 3. In step 108, the control device 60 performs the adjustment retry processing for retrying the adjustment processing. That is, in a case where the output electric current of the fuel cell 24 may not be fixed or maintained at 2A because the power consumption of the electric power load 53 decreases as described above (for example, in a case where a state in which a total electric current consumption of the electric power load 53 is equal to or lower than 1.5A continues for 30 seconds or longer), the control device 60 stops the combustion-portion steady-state temperature value obtaining processing, and after a short interval, the control device 60 retries the combustion-portion steady-state temperature value obtaining processing.

In particular, the control device 60 performs a fourth program corresponding to an adjustment retry subroutine shown in Fig. 7. In a case where the adjustment retry flag Fa indicates ON in step 502, YES is determined by the control device 60 and the control device 60 shifts the fourth program from step 502 to step 504. Meanwhile, in a case where the adjustment retry flag Fa indicates OFF in step 502, NO is determined by the control device 60 and the control device 60 ends the fourth program (the adjustment retry subroutine).

In step 504, until a fourth predetermined time TM4a or longer (for example, six hours) is counted by a fourth timer TM4, NO is determined by the control device 60 and the control device 60 shifts the fourth program from step 504 to step 506. In step 506, the control device 60 controls the fourth timer TM4 to count, In an initial cycle (in a case where the fourth timer TM4 is in a stopped state), the control device 60 commands the fourth timer TM4 to start counting.

In a case where the fourth predetermined time TM4a or longer is counted by the fourth timer TM4 in step 504, YES is determined by the control device 60 and the control device 60 shifts the fourth program from step 504 to step 508. In step 508, the control device 60 sets the adjustment retry flag Fa at OFF. In addition, in order to perform the next combustion-portion steady-state temperature value obtaining processing (the adjustment retry processing), the control device 60 sets the combustion-portion steady-state temperature value obtaining flag Fb at ON.

The operation of the fuel cell system based on the aforementioned control will be explained as follows with reference to a time chart of Fig. 9. For example, in a condition where the fuel cell system generates electricity in accordance with the power consumption in a household load (the electric power load 53), the adjustment start determination processing is started at time t1 and thereafter the combustion-portion steady-state temperature value obtaining processing is started. Then, the source material is supplied to the fuel cell 24 at the constant supply flow rate F and the fuel cell 24 thereby generates electricity at a constant output. An electric current of the fuel cell 24 is kept constant, i.e., is fixed, for example, at 2A.

Afterward, a state where a total electric current consumption of the electric power load 53 is equal to or lower than 1.5A continues for 30 seconds or longer from time t2 at which the first predetermined time TM1a (two hours) has not elapsed after time t1. In such case, the combustion-portion steady-state temperature value obtaining processing is stopped at time t3. Time t3 is the time at which the third predetermined time TM3a (30 seconds) has elapsed after the total electric current consumption of the electric power load 53 becomes equal to or lower than 1.5A.

The combustion-portion steady-state temperature value obtaining processing is stopped at time t3 as described above and the adjustment retry processing is restarted at a time interval after time t3. In other words, the combustion-portion steady-state temperature value obtaining processing is retried at time t4 at which the fourth predetermined time TM4a (six hours) has elapsed after time t3. In addition, during a period from time t3 to time t4, the fuel cell 24 generates electricity in accordance with the power consumption in the household load (the electric power load 53).

When the combustion-portion steady-state temperature value obtaining processing is retried at time t4, the source material is supplied to the fuel cell 24 at the constant supply flow rate F and the fuel cell 24 thereby generates electricity at a constant output. The control device 60 waits a temperature of the combustion portion 26 to be stable during a period from time t4 to time t5 at which the first predetermined time TM1a (two hours) has elapsed. At time t5, the aforementioned processing for computing a mean value of temperatures of the combustion portion 26, i.e., a combustion-portion mean temperature value computation processing) is started. The combustion-portion mean temperature value computation processing is performed during the period between time t5 and time t6.

As described above, the fuel cell system according to the embodiment includes the fuel cell 24 generating electricity by the source material and the oxidant gas respectively supplied to the anode and the cathode, the reforming portion 23 generating the fuel by the source material and the water to supply the fuel to the fuel cell 24, the combustion portion 26 burning the anode-off gas from the fuel cell 24 and the cathode-off gas from the fuel cell 24 to heat the reforming portion 23, and the casing 21 formed by the insulating material and accommodating therewithin the fuel cell 24, the reforming portion 23, and the combustion portion 26. According to the fuel cell system including such configuration, it is found that a temperature of the combustion portion 26 is sensitive to a supply flow rate of the source material.

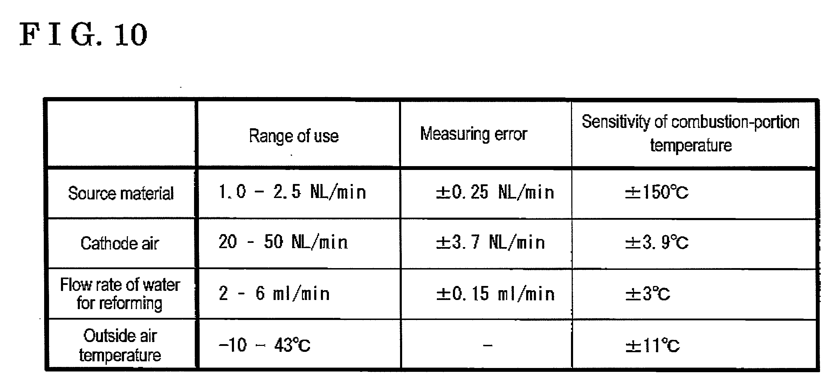

As shown Fig. 10, according to a result of a specific experiment in which an actual equipment is used, the sensitivity of the temperature of the combustion portion 26 is ± 150 degrees C in a case where the supply flow rate of the source material is varied in a range of use thereof from 1.0 to 2.5 NL/min. Further, according to the result of the specific experiment, the sensitivity of the temperature of the combustion portion 26 is ± 3.9 degrees C in a case where a supply flow rate of the cathode air (the oxidant gas) is varied in a range of use thereof from 20 to 50 NL/min. Furthermore, according to the result of the specific experiment, the sensitivity of the temperature of the combustion portion 26 is ± 3 degrees C in a case where the supply flow rate of the water is varied in a range of use thereof from 2 to 6 ml/min. Moreover, according to the result of the specific experiment, the sensitivity of the temperature of the combustion portion 26 is ± 11 degrees C in a case where outside air temperature of the fuel cell system is varied in a range of use thereof from -10 degrees C to 43 degrees C. The unit NL/min corresponds to a flow rate per unit time at a standard state of gas.

As clearly understood from the result shown in Fig. 10, the temperature of the combustion portion 26 is sensitive to the supply flow rate of the source material. According to the fuel cell system of the embodiment, such feature of the temperature of the combustion portion 26 is utilized to correct a detection error of the flow sensor 42a for detecting a supply flow rate of the source material, on the basis of a thermal deviation of the combustion portion 26.

The temperature obtaining means (steps 304, steps from 320 to 324) controls the fuel pump (supply device) 42c to supply the source material at the constant supply flow rate F, thereby obtaining a temperature of the combustion portion 26, which is detected by the temperature sensor 26b during the period in which the temperature of the combustion portion 26 is stable (i,e., during the period between time t5 and time t6 shown in Fig. 9). Further, the temperature deviation obtaining means (step 404) obtains a temperature deviation of the combustion portion 26, which is a difference between the reference temperature of the combustion portion 26 and the temperature of the combustion portion 26, which is obtained by the temperature obtaining means. Then, the supply flow rate deviation obtaining means (step 406) obtains a supply flow rate deviation of the source material from the temperature deviation obtained by the temperature deviation obtaining means. Thereafter, the adjustment means (step 410) adjusts a supply flow rate of the source material, which is detected by the flow sensor 42a, on the basis of the supply flow rate deviation obtained by the supply flow rate deviation obtaining means.

As described above, the source material is supplied at the constant supply flow rate F, thereby obtaining the supply flow rate deviation from the temperature deviation that is the difference between the reference temperature of the combustion portion 26 and the temperature of the combustion portion 26, which is obtained during the period in which the temperature is stable. Thereafter, the supply flow rate of the source material, which is detected by the flow sensor 42a is adjusted on the basis of the supply flow rate deviation obtained from the temperature deviation. Thus, the temperature of the combustion portion 26, which is sensitive to the supply flow rate of the source material, is utilized; thereby, the flow sensor 42a for detecting a flow rate of the source material (fuel) may be accurately calibrated.

In addition, in the fuel cell system according to the embodiment, the fuel cell 24 including the solid oxide fuel cell (SOFC) operates at high temperature, therefore being covered by the casing 21 and having a large thermal capacity. Accordingly, a temperature of the fuel cell 24 varies with a large time constant (with a range of six to ten hours) in response to a load variation. On the other hand, the temperature of the combustion portion 26 varies with a small time constant compared to the fuel cell 24 and a detection error of the flow sensor 42a may be corrected in a case where an output current of the fuel cell 24 is controlled at a constant current. Therefore, a user has few disadvantages of the fuel cell system. A disadvantage of the fuel cell system to the user is as follows. According to the fuel cell system of the embodiment, the control device 60 waits a temperature of the combustion portion 26 for two to three hours to be stable while fixing an output electric current of the fuel cell 24 at a low load of 2A, thereafter starting calibrating the flow sensor 42a. Accordingly, even when the user requires an output of 700W of the fuel cell 24 during such waiting time of the control device 60 for waiting the temperature of the combustion portion 26 to be stable, the fuel cell 24 may not supply the output of 700W to the user. In addition, the fuel cell system operates for a long period of time under low load at which power generation efficiency is low.

In addition, during a period in which a temperature of the combustion portion 26 is stable, for example, in a time range between time t1 to time t2 shown in Fig. 9, the temperature obtaining means may not obtain a temperature of the combustion portion 26, which is detected by the temperature sensor 26b. In such case, the control device 60 stops each processing of the temperature deviation obtaining means, the supply flow rate deviation obtaining means, and the adjustment means. Then, each processing of the temperature obtaining means, the temperature deviation obtaining means, the supply flow rate deviation obtaining means, and the adjustment means is retried at a time (time 4 in Fig. 9) at which a predetermined time (six hours) has elapsed after each processing of the temperature deviation obtaining means, the supply flow rate deviation obtaining means, and the adjustment means is stopped at time t3. Therefore, even in a case where a detection error of the flow sensor 42a may not be corrected at an initial adjustment processing, each processing of the temperature obtaining means, the temperature deviation obtaining means, the supply flow rate deviation obtaining means, and the adjustment means is retried after the predetermined time has elapsed. Thus, a time to perform the adjustment processing is changed. As a result, an operation condition (in specific, a power generating condition) of the fuel cell system at the time of the retry of each processing of the temperature obtaining means, the temperature deviation obtaining means, the supply flow rate deviation obtaining means, and the adjustment means is changed, and a detection error of the flow sensor 42a may be corrected appropriately in the changed power generation condition.

Further, in a case where the control device 60 determines that the flow sensor 42a needs to be calibrated, each processing of the temperature obtaining means, the temperature deviation obtaining means, the supply flow rate deviation obtaining means, and the adjustment means is performed; thereby, a detection error of the flow sensor 42a may be corrected at an appropriate timing.

Furthermore, according to the embodiment, it is appropriate that the period in which the temperature of the combustion portion 26 is stable corresponds to a period of time to calibrate the temperature sensor 26b. In a case where the period in which the temperature of the combustion portion 26 is stable corresponds to the period of time to calibrate the temperature sensor 26b, the flow sensor 42a may be calibrated at the same time as the temperature sensor 26b of the combustion portion 26 is calibrated. Therefore, the waiting time during which the control device 60 waits the temperature of the combustion portion 26 to be stable before the calibration of the flow sensor 42a may be utilized as the period of time to calibrate the temperature sensor 26b. As a result, a total time of the waiting time of the control device 60 and the period of time to calibrate the temperature sensor 26b may be reduced.

Moreover, according to the fuel cell system of the embodiment, it is appropriate that the period in which the temperature of the combustion portion 26 is stable corresponds to a period in which a power consumption pattern of the electric power load 53 used by a user is learned and a consumed power thereof, which is obtained on the basis of a learning result of the power consumption pattern, is stable. Accordingly, it may not be necessary to establish a specific time to calibrate the flow sensor 42a and the flow sensor 42a is calibrated during the period in which the consumed power obtained on the basis of the learning result of the power consumption pattern is stable. Consequently, the user may be avoided from deteriorating economic efficiency and hours of use of the fuel cell system may be restricted from being reduced by the period of time to calibrate the flow sensor 42a.

Additionally, according to the fuel cell system of the embodiment, it is appropriate that the period in which the temperature of the combustion portion 26 is stable corresponds to a period in which the electric power load 53 used by a user is under low load. Accordingly, the flow sensor 42a is calibrated during the period in which the electric power load 53 by the user is under low load; thereby, deterioration of power generation efficiency of the fuel cell may be restricted and the user may be avoided from deteriorating economic efficiency.
A fuel cell system includes a fuel cell (24), a reforming portion (23) generating a fuel by a source material and water, a combustion portion (26), a casing (21), a supply device (42c) supplying the source material, a flow sensor (42a) detecting a. supply flow rate of the source material, a temperature sensor (26b) detecting a temperature of the combustion portion (26), and a control device (60) controlling the supply device (42c) and including a temperature obtaining means (step 304, steps 320, 322, 324) for obtaining the temperature of the combustion portion (26) by controlling the supply device (42c) to supply the source material at a constant supply flow rate (F), a temperature deviation obtaining means (step 404) for obtaining a temperature deviation of the combustion portion (26), a supply flow rate deviation obtaining means (step 406) for obtaining a deviation of the supply flow rate from the temperature deviation, and an adjustment means (step 410) for adjusting the supply flow rate on the basis of the deviation of the supply flow rate.

## Claims

1. A fuel cell system, comprising:
a fuel cell (24) including an anode and a cathode and generating electricity by a fuel and an oxidant gas respectively supplied to the anode and the cathode;
a reforming portion (23) generating the fuel by a source material and water to supply the fuel to the fuel cell (24);
a combustion portion (26) burning an anode-off gas from the fuel cell (24) and a cathode-off gas from the fuel cell (24) to heat the reforming portion (23);
a casing (21) formed by an insulating material and accommodating therewithin the fuel cell (24), the reforming portion (23), and the combustion portion (26);
a supply device (42c) supplying the source material;
a flow sensor (42a) detecting a supply flow rate of the source material;
a temperature sensor (26b) detecting a temperature of the combustion portion (26); and
a control device (60) controlling the supply device (42c),
the control device (60) comprising:
a temperature obtaining means (step 304, steps 320, 322, 324) for obtaining the temperature of the combustion portion (26) by controlling the supply device (42c) to supply the source material at a constant supply flow rate (F), the temperature being detected by the temperature sensor (26b) during a period in which the temperature is stable;
a temperature deviation obtaining means (step 404) for obtaining a temperature deviation of the combustion portion (26), the temperature deviation being a difference between a reference temperature of the combustion portion (26) and the temperature of the combustion portion (26) obtained by the temperature obtaining means (step 304, steps 320, 322, 324);
a supply flow rate deviation obtaining means (step 406) for obtaining a deviation of the supply flow rate of the source material from the temperature deviation of the combustion portion (26) obtained by the temperature deviation obtaining means (step 404); and
an adjustment means (step 410) for adjusting the supply flow rate of the source material obtained by the flow sensor (42a), on the basis of the deviation of the supply flow rate obtained by the supply flow rate deviation obtaining means (step 406).

2. The fuel cell system according to Claim 1, wherein in a case where the temperature obtaining means (step 304, steps 320, 322, 324) is unable to obtain the temperature of the combustion portion (26) detected by the temperature sensor (26b) during the period in which the temperature is stable, each processing of the temperature deviation obtaining means (step 404), the supply flow rate deviation obtaining means (step 406), and the adjustment means (step 410) is stopped, and each processing of the temperature obtaining means (step 304, steps 320, 322, 324), the temperature deviation obtaining means (step 404), the supply flow rate deviation obtaining means (step 406), and the adjustment means (step 410) is retried at a time when a predetermined time has elapsed after each processing of the temperature deviation obtaining means (step 404), the supply flow rate deviation obtaining means (step 406), and the adjustment means (step 410) is stopped.

3. The fuel cell system according to Claim 1 or 2, wherein the control device (60) performs each processing of the temperature obtaining means (step 304, steps 320, 322, 324), the temperature deviation obtaining means (step 404), the supply flow rate deviation obtaining means (step 406), and the adjustment means (step 410) in a case where the control device (60) determines that the flow sensor (42a) needs to be calibrated.

4. The fuel cell system according to one of Claims 1 to 3, wherein the period in which the temperature is stable corresponds to a period of time to calibrate the temperature sensor (26b).

5. The fuel cell system according to one of Claims 1 to 4, wherein the period in which the temperature is stable corresponds to a period in which a power consumption pattern of an electric power load (53) used by a user is learned and a consumed power of the electric power load (53), obtained on the basis of a learning result of the power consumption pattern, is stable.

6. The fuel cell system according to one of Claims 1 to 5, wherein the period in which the temperature is stable corresponds to a period in which an electric power load (53) used by a user is under low load.

## Patentansprüche

1. Brennstoffzellensystem umfassend:
eine Brennstoffzelle (24), die eine Anode und eine Kathode beinhaltet und Elektrizität durch einen Brennstoff und ein Oxidatorgas, die jeweils zu der Anode und Kathode geliefert werden, erzeugt;
einen Reformierungsabschnitt (23), der durch ein Quellenmaterial und Wasser den Brennstoff erzeugt, um den Brennstoff zu der Brennstoffzelle (24) zu liefern;
einen Verbrennungsabschnitt (26), der ein Anodenabgas von der Brennstoffzelle (24) und ein Kathodenabgas von der Brennstoffzelle (24) verbrennt, um den Reformierungsabschnitt (23) zu erwärmen;
ein durch ein Dämmmaterial ausgebildetes und damit die Brennstoffzelle (24), den Reformierungsabschnitt (23) und den Verbrennungsabschnitt (26) beherbergendes Gehäuse (21);
eine Versorgungsvorrichtung (42c), die das Quellenmaterial liefert;
einen Durchflusssensor (42a), der eine Durchflussfliefermenge des Quellenmaterials ermittelt;
einen Temperatursensor (26b), der eine Temperatur des Verbrennungsabschnitts (26) ermittelt; und
eine Steuervorrichtung (60), die die Versorgungsvorrichtung (42c) steuert, wobei die Steuervorrichtung (60) umfasst:
ein Temperaturerreichungsmittel (Schritt 304, Schritt 320, 322, 324) zum Erreichen der Temperatur des Verbrennungsabschnitts (26) durch Steuern der Versorgungsvorrichtung (42c), um das Quellenmaterial mit einer konstanten Durchflussliefermenge (F) zu liefern, wobei die Temperatur während eines Zeitraums, in welchem die Temperatur stabil ist, durch den Temperatursensor (26b) ermittelt wird;
ein Temperaturabweichungserreichungsmittel (Schritt 404) zum Erreichen einer Temperaturabweichung des Verbrennungsabschnitts (26), wobei die Temperaturabweichung eine Differenz zwischen einer Referenztemperatur des Verbrennungsabschnitts (26) und der durch das Verbrennungserreichungsmittel (Schritt 304, Schritt 320, 322, 324) erreichten Temperatur des Verbrennungsabschnitts (26) ist;
ein Durchflussliefermengenabweichungserreichungsmittel (Schritt 406) zum Erreichen einer Abweichung der Durchflussliefermenge des Quellenmaterials aus der durch das Verbrennungsabweichungserreichungsmittel (Schritt 404) erreichten Temperaturabweichung des Verbrennungsabschnitts (26);
ein Einstellmittel (Schritt 410) zum Einstellen der durch den Durchflusssensor (42a) erreichten Durchflussliefermenge des Quellenmaterials, basierend auf der Abweichung der durch das Durchflussliefermengenabweichungserreichungsmittel (Schritt 406) erreichten Durchflussliefermenge.

2. Brennstoffzellensystem nach Anspruch 1, wobei in einem Fall, in dem das Temperaturerreichungsmittel (Schritt 304, Schritt 320, 322, 324) unfähig ist, die durch den Temperatursensor (26b) ermittelte Temperatur des Verbrennungsabschnitts (26) während des Zeitraums, in welchem die Temperatur stabil ist, zu erreichen, jedes Betreiben des Temperaturabweichungsmittels (Schritt 404), des Durchflussliefermengenabweichungserreichungsmittels (Schritt 406) und des Einstellmittels (Schritt 410) angehalten wird und jeder Vorgang des Temperaturerreichungsmittels (Schritt 304, Schritt 320, 322, 324), des Temperatureinstellerreichungsmittels (Schritt 404), des Durchflussliefermengenabweichungserreichungsmittels (Schritt 406) und des Einstellmittels (Schritt 410) zu einer Zeit erneut versucht wird, wenn eine vorgegebene Zeit verstrichen ist, nachdem jeder Vorgang des Temperaturabweichungsmittels (Schritt 404), des Durchflussliefermengenabweichungserreichungsmittels (Schritt 406) und des Einstellmittels (Schritt 410) angehalten wurde.

3. Brennstoffzellesystem nach Anspruch 1 oder 2, wobei die Steuervorrichtung (60) jeden Vorgang des Temperaturerreichungsmittels (Schritt 304, Schritt 320, 322, 324), des Temperatureinstellerreichungsmittels (Schritt 404), des Durchflussliefermengenabweichungserreichungsmittels (Schritt 406) und des Einstellmittels (Schritt 410) in einem Fall durchführt, wenn die Steuervorrichtung (60) entscheidet, dass der Durchflusssensor (42a) kalibriert werden muss.

4. Brennstoffzellensystem nach einem der Ansprüche 1 bis 3, wobei der Zeitraum, in welchem die Temperatur stabil ist, einem Zeitraum einer Zeit zum Kalibrieren des Temperatursensors (26b) entspricht.

5. Brennstoffzellensystem nach einem der Ansprüche 1 bis 4, wobei der Zeitraum, in welchem die Temperatur stabil ist, einem Zeitraum entspricht, in welchem ein Stromverbrauchsmuster einer durch einen Anwender verwendeten elektrischen Stromlast (53) erlernt wird und ein verbrauchter Strom der auf der Basis eines erlernten Ergebnisses des Stromverbrauchsmusters erreichten elektrischen Stromlast (53) stabil ist.

6. Brennstoffzellensystem nach einem der Ansprüche 1 bis 5, wobei der Zeitraum, in welchem die Temperatur stabil ist, einem Zeitraum entspricht, in welchem eine durch einen Anwender verwendete elektrische Stromlast (53) unter Schwachlast ist.

## Revendications

1. Système de pile à combustible comprenant :
une pile à combustible (24) comportant une anode et une cathode, et produisant de l'électricité au moyen d'un combustible et d'un gaz oxydant fournis respectivement à la l'anode et à la cathode ;
une partie de reformage (23) produisant le combustible au moyen d'une matière source et d'eau pour fournir le combustible à la pile à combustible (24) ;
une partie de combustion (26) brûlant un gaz dégagé par l'anode depuis la pile à combustible (24) et un gaz dégagé par la cathode depuis la pile à combustible (24) pour chauffer la partie de reformage (23) ;
un boîtier (21) constitué d'un matériau isolant et accueillant en son sein la pile à combustible (24), la partie de reformage (23) et la partie de combustion (26) ;
un dispositif d'alimentation (42c) fournissant la matière source ;
un capteur de débit (42a) détectant un débit d'alimentation en matière source ;
un capteur de température (26b) détectant une température de la partie de combustion (26) ; et
un dispositif de commande (60) commandant le dispositif d'alimentation (42c),
le dispositif de commande (60) comprenant :
un moyen d'obtention de température (étape 304, étapes 320, 322, 324) destiné à obtenir la température de la partie de combustion (26) en commandant le dispositif d'alimentation (42c) pour fournir la matière source à un débit d'alimentation constant (F), la température étant détectée par le capteur de température (26b) au cours d'une période où la température est stable ;
un moyen d'obtention d'écart de température (étape 404) destiné à obtenir un écart de température de la partie de combustion (26), l'écart de température étant une différence entre une température de référence de la partie de combustion (26) et la température de la partie de combustion (26) obtenue par le moyen d'obtention de température (étape 304, étapes 320, 322, 324) ;
un moyen d'obtention d'écart de débit d'alimentation (étape 406) destiné à obtenir un écart du débit d'alimentation en matière source à partir de l'écart de température de la partie de combustion (26) obtenu par le moyen d'obtention d'écart de température (étape 404) ; et
un moyen de réglage (étape 410) destiné à régler le débit d'alimentation en matière source, obtenu par le capteur de débit (42a), sur la base de l'écart de débit d'alimentation obtenu par le moyen d'obtention d'écart de débit d'alimentation (étape 406).

2. Système de pile à combustible selon la revendication 1, dans lequel dans le cas où le moyen d'obtention de température (étape 304, étapes 320, 322, 324) ne peut pas obtenir la température de la partie de combustion (26), détectée par le capteur de température (26b), au cours de la période où la température est stable, chaque traitement du moyen d'obtention d'écart de température (étape 404), du moyen d'obtention d'écart de débit d'alimentation (étape 406), et du moyen de réglage (étape 410) est arrêté, et chaque traitement du moyen d'obtention de température (étape 304, étapes 320, 322, 324), du moyen d'obtention d'écart de température (étape 404), du moyen d'obtention d'écart de débit d'alimentation (étape 406) et du moyen de réglage (étape 410) est tenté à nouveau à un moment où un temps prédéterminé s'est écoulé après que chaque traitement du moyen d'obtention d'écart de température (étape 404), du moyen d'obtention d'écart de débit d'alimentation (étape 406) et du moyen de réglage (étape 410) a été arrêté.

3. Système de pile à combustible selon la revendication 1 ou 2, dans lequel le dispositif de commande (60) effectue chaque traitement du moyen d'obtention de température (étape 304, étapes 320, 322, 324), du moyen d'obtention d'écart de température (étape 404), du moyen d'obtention d'écart de débit d'alimentation (étape 406) et du moyen de réglage (étape 410) dans le cas où le dispositif de commande (60) détermine que le capteur de débit (42a) a besoin d'être étalonné.

4. Système de pile à combustible selon l'une des revendications 1 à 3, dans lequel la période où la température est stable correspond à une période de temps d'étalonnage du capteur de température (26b).

5. Système de pile à combustible selon l'une des revendications 1 à 4, dans lequel la période où la température est stable correspond à une période où un modèle de consommation d'énergie d'une charge de puissance (53) utilisée par un utilisateur est appris et où une puissance absorbée de la charge de puissance (53), obtenue sur la base d'un résultat d'apprentissage du modèle de consommation d'énergie, est stable.

6. Système de pile à combustible selon l'une des revendications 1 à 5, dans lequel la période où la température est stable correspond à une période où une charge de puissance (53) utilisée par un utilisateur est soumise à une faible charge.
